# FASCICULE DE BREVET EUROPEEN

(11) **EP 1 377 854 B1**
(45) Date de publication et mention de la délivrance du brevet: **09.01.2008**
(21) Numéro de dépôt: 02730358.5
(22) Date de dépôt: 05.04.2002
(51) Int. Cl.: G02B 6/30

(54) **DISPOSITIF DE TRANSMISSION D'ONDES OPTIQUES A FACES DE COUPLAGE INCLINEES**
ÜBERTRAGUNGSVORRICHTUNG FÜR OPTISCHE WELLEN MIT SCHRÄGEN KOPPLUNGSFLÄCHEN
DEVICE FOR TRANSMITTING OPTICAL WAVES WITH INCLINED COUPLING SURFACES

(30) Priorité: 10.04.2001 FR 0104887
(43) Date de publication de la demande: 07.01.2004
(73) Titulaire: Opsitech-Optical System on a Chip, 38054 Grenoble Cedex (FR)
(72) Inventeur: CHABROL, Claude, F-38190 FROGES (FR)
(74) Mandataire: Casalonga, Axel
(86) Numéro de dépôt international: PCT/FR2002/001199
(87) Numéro de publication internationale: WO 2002/084355

(56) Documents cités:
- EP-A- 0 527 604
- WO-A-96/07118
- SHIOTA T ET AL: "IMPROVED OPTICAL COUPLING BETWEEN SILICA-BASED WAVEGUIDES AND OPTICAL FIBERS" OFC, OPTICAL FIBER COMMUNICATION CONFERENCE TECHNICAL DIGEST SERIES, WASHINGTON, DC, US, 20 février 1994 (1994-02-20), pages 282-283, XP000791065

## Description

La présente invention concerne un dispositif de transmission d'ondes optiques qui comprend une structure intégrée à laquelle est optiquement couplée au moins une fibre optique.

Il est connu d'effectuer une découpe en biais de l'extrémité d'une fibre optique et de réaliser un chanfrein sur un bord d'une structure intégrée dans lequel débouche latéralement un micro-guide optique intégré de telle sorte que l'extrémité de ce micro-guide intégré soit biseautée, ledit chanfrein étant en général poli à plat.

Ayant placé l'extrémité biseautée de la fibre optique sur le chanfrein de la structure intégrée, l'interface optique entre la fibre optique et le micro-guide optique intégré est alors en biais.

Une telle disposition permet d'éviter ou de limiter les réflections parasites susceptibles de se produire aux interfaces entre les fibres optiques et les micro-guides optiques intégrés. Les documents EP-A-0 527 604 et WO-A-96/07118 décrivent de tels montages, dans lesquels les fibres optiques sont indépendantes.

En application de ce qui précède, on a déjà proposé de découper et de polir en biais l'extrémité d'une nappe de fibres optiques groupées parallèlement dans un ruban plastique plat, le plan d'extrémité étant en biais ou incliné par rapport au plan du ruban, et de réaliser un chanfrein poli sur un bord d'une structure intégrée dans lequel débouche latéralement des micro-guides optiques intégrés de telle sorte que les extrémités de ces micro-guides intégrés soient biseautées. L'extrémité biseautée de la nappe de fibres optique est alors placée à plat sur le chanfrein poli de la structure intégrée de façon à coupler optiquement les micro-guides optiques et les fibres optiques.

Les dispositions qui précèdent présentent une difficulté de positionnement des fibres optiques par rapport aux micro-guides optiques intégrés du fait que les extémités en biais des fibres optiques peuvent glisser sur les surfaces des chanfreins des structures intégrées.

En outre, de telles dispositions ne sont pas applicables lorsque l'on souhaite que les interfaces entre les fibres optiques et les micro-guides optiques soient éloignées des bords des structures intégrées,

La présente invention a en particulier pour but de remédier à cet inconvénient et a pour objet un dispositif de transmission d'ondes optiques comprenant une structure intégrée qui comprend une multiplicité de micro-guides optiques qui s'étendent dans un plan d'intégration, dont les parties d'extrémité sont situées les unes à côté des autres et sont sensiblement à directions parallèles et une multiplicité d'encoches qui présentent des faces d'extrémité au travers desquelles débouchent respectivement lesdites parties d'extrémité desdits micro-guides optiques et qui s'étendent perpendiculairement auxdits plans d'intégration ; et comprenant des fibres optiques dont les parties d'extrémité sont respectivement disposées et fixées dans lesdites encoches et s'étendent parallèlement aux plans d'intégration de ladite structure de façon à coupler optiquement les faces d'extrémité de ces fibres optiques et les faces de couplage précitées desdits micro-guides optiques ; lesdites faces d'extrémité desdites encoches s'étendant perpendiculairement auxdits plans d'intégration et étant en biais ou inclinées par rapport à la direction longitudinale des parties d'extrémités desdites fibres optiques et/ou desdits micro-guides optiques ; lesdites faces d'extrémité desdites fibres optiques s'étendant parallèlement auxdites faces d'extrémité desdites encoches et étant en biais ou inclinées.

Selon l'invention, d'une part lesdites faces d'extrémité desdites encoches sont alignées et appartiennent à un même plan perpendiculaire au plan d'intégration précité et d'autre part lesdites fibres optiques sont assemblées ou groupées sous forme d'une nappe plate et reliées entre elles par une matière plastique, leurs faces d'extrémités étant alignées dans un même plan.

Selon l'invention, les directions longitudinales des parties d'extrémité des fibres optiques coïncident, de préférence, sensiblement avec les directions longitudinales desdites parties d'extrémité desdits micro-guides optiques.

La présente invention sera mieux comprise à l'étude de dispositifs de transmission d'ondes optiques, décrits à titre d'exemples non limitatifs et illustrés par le dessin sur lequel :
- la figure 1 représente une vue de dessus d'un premier dispositif de transmission d'ondes optiques selon l'état de la technique;
- la figure 2 représente une coupe longitudinale selon II-II du dispositif de la figure 1 ;
- et la figure 3 représente une vue de dessus d'un dispositif de transmission d'ondes optiques selon la présente invention.

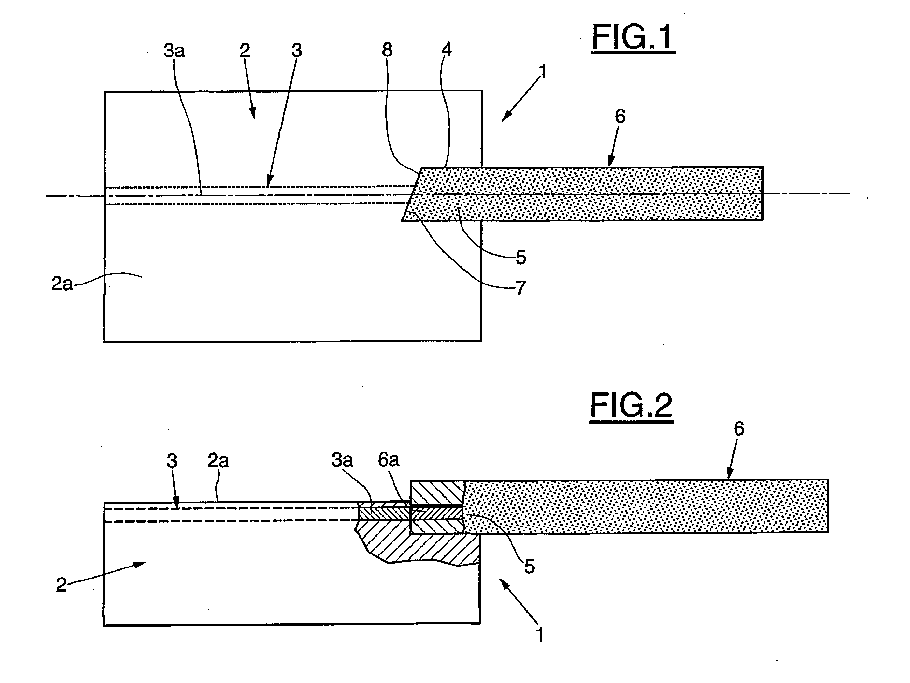

En se reportant aux figures 1 et 2, on voit qu'on a représenté un dispositif de transmission d'ondes optiques 1 qui comprend une structure optique intégrée 2 qui présente, dans un plan d'intégration s'étendant parallèlement à sa surface 2a, un micro-guide optique longitudinal 3 et une partie en creux ou encoche longitudinale 4 dans laquelle débouche le micro-guide optique 3.

Dans l'encoche 4 est disposée longitudinalement et fixée par exemple par collage la partie d'extrémité 5 d'une fibre optique 6, de telle sorte que la face transversale d'extrémité 7 de l'encoche 4 et la face d'extrémité 8 de la fibre optique 6 sont au voisinage ou en contact et que le coeur de transmission 3a du micro-guide optique 3 est couplé optiquement au coeur de transmission 6a de la fibre optique 6, la direction longitudinale de la partie d'extrémité 5 de la fibre optique 6 coïncidant avec la direction longitudinale du micro-guide optique 3.

La face transversale d'extrémité 7 de l'encoche 4, qui constitue une face de couplage du micro-guide 3, s'étend sensiblement perpendiculairement au plan d'intégration de la structure intégrée 2. De plus, cette face de couplage 7 est en biais par rapport à la direction longitudinale du micro-guide optique 3, de telle sorte que les lignes d'intersection entre d'une part le plan d'intégration de la structure intégrée 2 et d'autre part la face de couplage 7 de l'encoche 4 et un plan perpendiculaire à la direction longitudinale du micro-guide optique 3 sont inclinées et forment un angle par exemple d'environ huit degrés.

De façon correspondante, la face d'extrémité 8 de la fibre optique 6 est en biais par rapport à la direction longitudinale de la partie d'extrémité 5 de la fibre optique 6, de telle sorte que les lignes d'intersection entre d'une part le plan d'intégration de la structure intégrée 2 et d'autre part la face d'extrémité 8 de la fibre optique 6 et un plan perpendiculaire à la direction longitudinale de la partie d'extrémité 5 de la fibre optique 6 sont inclinées et forment un angle par exemple d'environ huit degrés.

L'encoche 4 est avantageusement réalisée par photo-lithographie et gravure de telle sorte qu'elle peut être prévue en n'importe quel endroit de la surface de la structure intégrée 2.

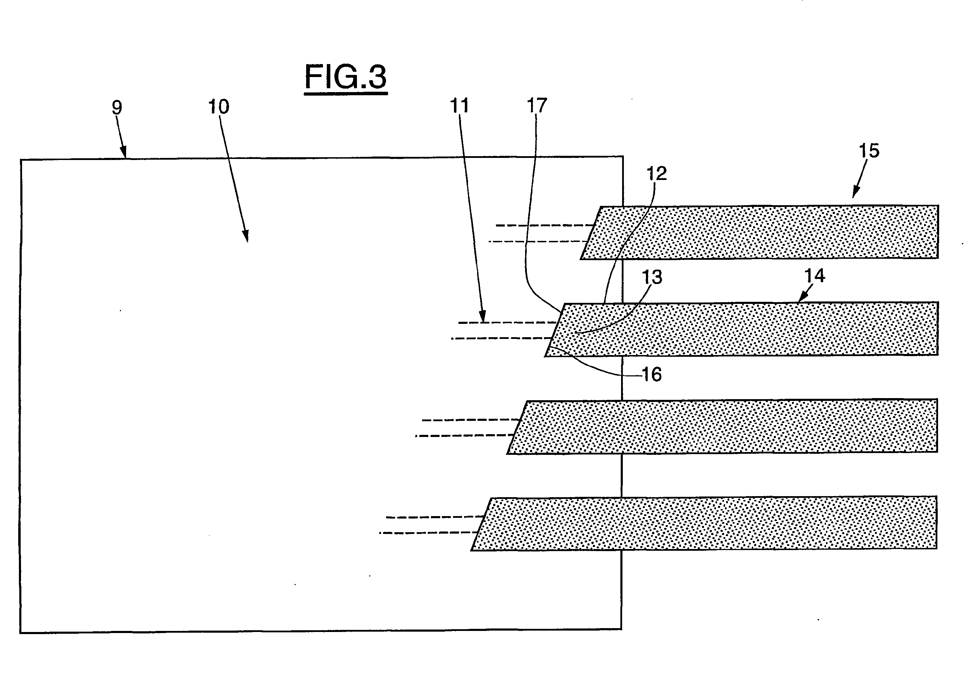

En se reportant à la figure 3, on voit qu'on a représenté un dispositif de transmission d'ondes optiques 9 selon la présente invention qui comprend une structure optique intégrée 10 qui présente une multiplicité de micro-guides optiques intégrés 11 formés dans un plan d'intégration, ainsi qu'une multiplicité d'encoches longitudinales 12 dans lesquelles sont installées et fixées les parties longitudinales d'extrémité 13 de fibres optiques 14 maintenues entre elles de façon à constituer une nappe plate 15, les fibres optiques 14 étant reliées entre elles par une matière plastique non représentée.

Les faces transversales d'extrémité 16 des encoches 12, qui constituent des faces de couplage des micro-guides optiques 11, et les faces d'extrémité 17 des fibres optiques 14 sont disposées respectivement par rapport aux micro-guides optiques 11 et aux fibres optiques 14 comme dans l'exemple décrit en référence aux figures 1 et 2.

En outre, dans cet exemple, les faces de couplage 16 sont alignées de telle sorte qu'elles appartiennent à un même plan perpendiculaire au plan d'intégration de la structure optique intégrée 10 et en biais ou incliné par rapport à un plan perpendiculaire à la direction des micro-guides optiques 11.

De façon correspondante, les faces d'extrémité 17 des fibres optiques 14 de la nappe 15 sont dans un même plan en biais ou incliné par rapport au plan de cette nappe.

Ainsi, les fibres optiques 14 de la nappe 15 peuvent être sectionnées en même temps et peuvent être polies collectivement afin de former leurs faces d'extrémité 17 en biais.

La présente invention ne se limite pas aux exemples ci-dessus décrits. Bien des variantes sont possibles sans sortir du cadre défini par les revendications annexées.

## Revendications

1. Dispositif de transmission d'ondes optiques comprenant une structure intégrée qui comprend une multiplicité de micro-guides optiques (11) qui s'étendent dans un plan d'intégration, dont les parties d'extrémité sont situées les unes à côté des autres et sont sensiblement à directions parallèles et une multiplicité d'encoches (12) qui présentent des faces d'extrémité au travers desquelles débouchent respectivement lesdites parties d'extrémité desdits micro-guides optiques et qui s'étendent perpendiculairement auxdits plans d'intégration ; et comprenant des fibres optiques (14) dont les parties d'extrémité sont respectivement disposées et fixées dans lesdites encoches et s'étendent parallèlement aux plans d'intégration de ladite structure de façon à coupler optiquement les faces d'extrémité (17) de ces fibres optiques (14) et les faces de couplage précitées desdits micro-guides optiques ; lesdites faces d'extrémité (16) desdites encoches (12) s'étendant perpendiculairement auxdits plans d'intégration et étant en biais ou inclinées par rapport à la direction longitudinale des parties d'extrémités desdites fibres optiques (6) et/ou desdits micro-guides optiques (11) ; lesdites faces d'extrémité (8) desdites fibres optiques (6) s'étendant parallèlement auxdites faces d'extrémité (17) desdites encoches (12) et étant en biais ou inclinées ; **caractérisé par le fait que** lesdites faces d'extrémité (17) desdites encoches (12) sont alignées et appartiennent à un même plan perpendiculaire au plan d'intégration précité et que lesdites fibres optiques (14) sont assemblées ou groupées sous forme d'une nappe plate (15) et reliées entre elles par une matière plastique, leurs faces d'extrémités étant alignées dans un même plan.

2. Dispositif selon la revendication 1, **caractérisé par le fait que** les directions longitudinales des parties d'extrémité (13) des fibres optiques (14) coïncident sensiblement avec les directions longitudinales desdites parties d'extrémité desdits micro-guides optiques (11).

## Claims

1. Optical wave transmission device comprising an integrated structure, which comprises a multiplicity of optical microguides (11) that lie in an integration plane, the end parts of which are located beside one another and are of approximately parallel directions, and a multiplicity of notches (12) that have end faces through which the respective said end parts of said optical microguides emerge and that lie perpendicular to said integration planes; and comprising optical fibers (14), the end parts of which are respectively placed and fixed in said notches and lie parallel to the integration planes of said structure so as to optically couple the end faces (17) of these optical fibers (14) to the aforementioned coupling faces of said optical microguides; said end faces (16) of said notches (12) lying perpendicular to said integration planes and being oblique or inclined to the longitudinal direction of the end parts of said optical fibers (6) and/or of said optical microguides ((11); said end faces (8) of said optical fibers (6) lying parallel to said end faces (17) of said notches (12) and being oblique or inclined; **characterized in that** said end faces (17) of said notches (12) are aligned and lie in one and the same plane perpendicular to the aforementioned integration plane and **in that** said optical fibres (14) are assembled or grouped in the form of a flat ribbon (15) and joined together by a plastic, their end faces being aligned in one and the same plane.

2. Device according to Claim 1, **characterized in that** the longitudinal directions of the end parts (13) of the optical fibers (14) coincide approximately with the longitudinal directions of said end parts of said optical microguides (11).

## Patentansprüche

1. Übertragungsvorrichtung für optische Wellen, aufweisend:
eine integrierte Struktur, die mehrere optische Mikroleiter (11) aufweist, die sich in einer Integrationsebene erstrecken und deren Endabschnitte nebeneinander angeordnet sind und im wesentlichen parallel gerichtet sind, sowie mehrere Kerben (12) aufweist, die Endflächen aufweisen, an denen jeweils die Endabschnitte der optischen Mikroleiter münden und die sich senkrecht zu den Integrationsebenen erstrecken; und
optische Fasern (14), deren Endabschnitte jeweils in den Kerben angeordnet und befestigt sind und sich parallel zu den Integrationsebenen der Struktur erstrecken, um die Endflächen (17) dieser optischen Fasern (14) und die genannten Kopplungsflächen der optischen Mikroleiter optisch zu koppeln;
wobei sich die Endflächen (16) der Kerben (12) senkrecht zu den Integrationsebenen erstrecken und schräg oder geneigt bezüglich der Längsrichtung der Endabschnitte der optischen Fasern (6) und/oder der optischen Mikroleiter (11) sind;
wobei sich die Endflächen (8) der optischen Fasern (6) parallel zu den Endflächen (17) der Kerben (12) erstrecken und schräg oder geneigt sind;
**dadurch gekennzeichnet, daß** die Endflächen (17) der Kerben (12) ausgerichtet sind und in einer Ebene liegen, die senkrecht zur genannten Integrationsebene ist, und **dadurch**, daß die optischen Fasern (14) in Form eines flachen Bands (15) zusammengestellt oder gruppiert und über ein Kunststoffmaterial miteinander verbunden sind, wobei ihre Endflächen in ein und derselben Ebene ausgerichtet sind.

2. Vorrichtung nach Anspruch 1, **dadurch gekennzeichnet, daß** die Längsrichtungen der Endabschnitte (13) der optischen Fasern (14) im wesentlichen mit den Längsrichtungen der Endabschnitte der optischen Mikroleiter (11) übereinstimmen.
